(19) Europäisches Patentamt
European Patent Office
Office européen des brevets

(11) **EP 2 898 113 B1**

(12) **FASCICULE DE BREVET EUROPEEN**

(45) Date de publication et mention
de la délivrance du brevet:
**17.02.2021 Bulletin 2021/07**

(21) Numéro de dépôt: **13802430.2**

(22) Date de dépôt: **20.09.2013**

(51) Int Cl.:
*C23C 18/12* (2006.01)          *H01L 31/18* (2006.01)
*F24S 70/25* (2018.01)          *F24S 70/30* (2018.01)
*F24S 70/225* (2018.01)

(86) Numéro de dépôt international:
**PCT/IB2013/058707**

(87) Numéro de publication internationale:
**WO 2014/045241 (27.03.2014 Gazette 2014/13)**

(54) **PROCÉDÉ DE DURCISSEMENT D'UN REVÊTEMENT D'UN ÉLÉMENT DE CAPTEUR SOLAIRE**

VERFAHREN ZUM HÄRTEN EINER BESCHICHTUNG EINES SONNENKOLLEKTORELEMENTS

METHOD FOR HARDENING A COATING OF A SOLAR COLLECTOR ELEMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.09.2012 PCT/IB2012/054993**

(43) Date de publication de la demande:
**29.07.2015 Bulletin 2015/31**

(73) Titulaire: **Ecole Polytechnique Fédérale de
Lausanne (EPFL)
1015 Lausanne (CH)**

(72) Inventeurs:
• **JOLY, Martin
CH-1006 Lausanne (CH)**
• **SCHÜLER, Andreas
CH-1018 Lausanne (CH)**

(74) Mandataire: **Byrne, Declan
Andre Roland S.A.
Intellectual Property Services
P.O. Box 5107
1002 Lausanne (CH)**

(56) Documents cités:
**EP-A2- 2 243 861          WO-A2-2013/128366
CN-A- 101 602 579          CN-A- 101 754 508
JP-A- S5 886 350          KR-A- 20090 065 573
US-A1- 2005 087 294**

• **DATABASE WPI Week 199851 Thomson
Scientific, London, GB; AN 1998-605365
XP002731182, -& JP H10 275927 A (SANYO
ELECTRIC CO LTD) 13 octobre 1998 (1998-10-13)**
• **KALUZA L ET AL: "Sol-gel derived CuCoMnOx
spinel coatings for solar absorbers: Structural
and optical properties", SOLAR ENERGY
MATERIALS AND SOLAR CELLS, vol. 70, no. 2,
15 décembre 2001 (2001-12-15), pages 187-201,
XP004303753, ELSEVIER SCIENCE
PUBLISHERS, AMSTERDAM, NL ISSN:
0927-0248, DOI: 10.1016/S0927-0248(01)00024-1**

## Description

## Domaine de l'invention

L'invention concerne la fabrication d'éléments de capteurs solaires. Elle concerne plus précisément le revêtement d'un élément de capteur solaire et son durcissement, en particulier un élément de capteur solaire incluant un matériau conducteur (par exemple, un matériau métallique) ou un élément comprenant une couche conductrice (par exemple, une couche métallique ou conductrice), l'élément présentant une surface tubulaire.

## Etat de l'art

a. Production de couches minces sélectives par technique sol-gel

Un revêtement sélectif pour absorbeur solaire thermique a pour but d'absorber le maximum de l'énergie radiative incidente du soleil tout en minimisant les pertes énergétiques sous forme de radiations thermiques. La réflectivité $R(\lambda)$ optimale d'une telle surface vaut 0 pour des valeurs de longueurs d'onde $\lambda$ allant de 250nm à 2500nm environ et 1 au-delà. La sélectivité est décrite par deux paramètres : l'absorption solaire $\alpha_{sol}$ et l'émissivité thermique $\varepsilon_{th}$ dont les expressions mathématiques, fonction de $\Theta$ la température, sont les suivantes :

$$\alpha_{sol}(\Theta) = \frac{\int_0^{\infty} I_{sol}(\lambda)(1 - R(\lambda, \Theta))d\lambda}{\int_0^{\infty} I_{sol}(\lambda)d\lambda}$$

$$\varepsilon_{th}(\Theta) = \frac{\int_0^{\infty} L_{\lambda}^0(\Theta)(1 - R(\lambda, \Theta))d\lambda}{\int_0^{\infty} L_{\lambda}^0(\Theta)d\lambda}$$

où $I_{sol}$ représente la densité de rayonnement solaire et $L_{\lambda}^0$ Le rayonnement d'équilibre.

La demande de brevet WO 2011/048235 divulgue le dépôt d'un film liquide sur un élément de capteur solaire de forme tubulaire. Dans cette antériorité un bac mobile perforé se déplace de haut en bas le long d'un tube. Le film liquide est déposé par trempage (dip-coating) sur l'ensemble du tube et la calcination se fait dans une enceinte conventionnelle.

Si l'on considère les brevets qui traitent de la technique sol-gel pour revêtements sélectifs, ceux-ci sont peu nombreux.

On trouve entre autre le brevet de L. Zhu et al. (CN201852338-U) qui présente un revêtement sélectif déposé par technique sol-gel sur tube à base de $TiO_2$ / $PbS$ ou encore R. Jiang et al. (CN102087054-A) qui propose un revêtement sélectif basé sur le $M-Al_2O_3$. D'autres brevets décrivent des revêtements sélectifs par technique sol-gel comme celui de A. Schüssler (DE19620645-C2) ou B. Rostami (EP2243861-A2) sans citer l'application du procédé sur tube. Dans les brevets sur-mentionnés, la technique de calcination par induction n'est jamais mentionnée ni suggérée.

Les documents suivants décrivent la production de revêtements par technique sol-gel : K. Sang Hyeob Daejeon et al. (EP1930469-A1) ou R. Beaurain et al. (WO2006092536-A2).

b. Production de revêtements sélectifs pour application solaire

La production de revêtements sélectifs pour absorbeurs plan ou tubulaire est couramment utilisée dans le domaine de l'énergie solaire. Le dépôt du revêtement se fait généralement sous vide ou par galvanoplastie. On trouve par exemple les documents brevets suivants EP1867934-A1, EP1217394-B1 (Alanod), JP55006414-A, JP55014827-A, JP57067756-A (Matsushita), 4312915 (MIT), EP1887293-A2 (Viessmann), EP2341038-A1 (Abengoa Solar New Technologies) ou EP2253737-A1 (Schott Solar AG).

c. Type de matériaux déposés

Pour les applications dans le domaine de la conversion de l'énergie solaire, un revêtement déjà étudié est composé des éléments suivants : silicium, manganèse, cuivre, cobalt et oxygène. On peut citer par exemple les travaux de L. Kaluza et al. [1] ou encore de R. Bayon et al. [2]. Les propriétés de ce revêtement ont été décrites en 2013 [3].

d. Dépôt du film et calcination

La technique de production d'un revêtement par technique sol-gel se fait en deux étapes distinctes : le dépôt d'un film liquide par trempage, spray ou autres techniques connues puis la calcination pour le durcissement du film. La calcination à 300-500°C dans un four traditionnel présente les désavantages suivant :

- la taille de celui-ci est importante. Effectivement, si l'on considère une enceinte fermée où le tube serait calciné en une étape, il serait nécessaire d'avoir une enceinte de 4 mètres pour un tube de dimension similaire. Ceci implique une inhomogénéité de température à l'intérieur de l'enceinte et donc une inhomogénéité de phase du revêtement final ;
- le rendement est faible puisqu'il est nécessaire de chauffer une grande partie de l'enceinte. Pour pallier à ces pertes, il est nécessaire d'utiliser des sas d'entrée et de sortie ce qui complexifie le système ; et

- la dernière raison et certainement la plus problématique est la nécessité de chauffer rapidement depuis la périphérie du revêtement pour favoriser un bon débit de production et minimiser le coût de production lié à la calcination. Toutefois, si la calcination est faite de manière trop rapide, le revêtement déposé forme des cloques. Le revêtement obtenu est alors de mauvaise qualité : couleur inhomogène, aspect rugueux ou décollement du revêtement.

La calcination conventionnelle est donc peu efficace d'un point de vue énergétique et ne permet pas une calcination rapide.

Un but de la présente invention est de répondre à ces inconvénients.

e. Références

[1] Kaluza L., Orel B., Drazic G., Köhl M., 2001. Sol-gel derived CuCoMnOx spinel coatings for solar absorbers: Structural and optical properties. Sol. Energy Mater. and Sol. Cells 70, 187.
[2] Bayón R., Vicente G., Maffiotte C., Morales Á., Preparation of selective absorbers based on CuMn spinels by dip-coating method, Renewable Energy 33 (2008) 348-353.
[3] Joly M., Antonetti Y., Python M., Gonzalez M., Gascou T., Scartezzini J.-L., and Schüler A., Novel black selective coating for tubular solar absorbers based on a sol-gel method, Solar Energy 94 (2013) 233-239.

**Description générale de l'invention**

La présente invention concerne un procédé de durcissement d'un revêtement d'un élément de capteur solaire selon la revendication 1 et un procédé de production d'un élément de capteur solaire selon la revendication 10.

D'autres caractéristiques avantageuses de l'invention sont indiquées dans les revendications dépendantes.

D'une manière générale, le durcissement ou la calcination d'un revêtement optiquement mince, déposé sur un substrat tubulaire incluant un matériau conducteur ou sur lequel une couche conductrice est déposée, grâce à un chauffage à induction fait l'objet de la présente demande de brevet. Le revêtement peut être déposé directement sur le substrat tubulaire ou sur un autre revêtement déjà déposé et calciné sur le substrat tubulaire.

Plus précisément, la présente invention concerne principalement la production d'une structure sélective multi-revêtements pour absorbeurs solaires de préférence tubulaires et le durcissement de cette structure par induction.

Selon un mode de réalisation préféré de l'invention, on dépose plusieurs revêtements sur un substrat tubulaire (par exemple, un tube en acier inoxydable) pour obtenir une structure sélective multi-revêtements, c'est-à-dire une surface optiquement sélective qui a la capacité d'absorber l'énergie incidente émise par le soleil tout en minimisant les pertes par émissions thermiques.

La technique de dépôt est de préférence le dip-coating (trempage) de solution sol-gel. La production se déroule en deux étapes : le dépôt par dip-coating et la calcination d'un revêtement mince par induction.

Le principe sur lequel se base l'invention consiste à créer grâce à une bobine d'induction un courant induit dans le substrat tubulaire. Par effet Joule, le substrat tubulaire est chauffé à une température désirée. La bobine se déplace le long du tube, par exemple sur un chariot mobile de manière à chauffer l'ensemble du substrat tubulaire.

Un autre revêtement sélectif ou non-sélectif peut être ensuite déposé et calciné de la même manière afin de produire un élément de capteur solaire.

D'une manière générale et en particulier pour le revêtement envisagé dans le cadre de l'invention, l'invention présente les avantages suivants par rapport à un chauffage traditionnel :

- la taille de l'appareil pour le chauffage est faible. Le substrat tubulaire n'est pas chauffé entièrement mais de manière continue sur une région de quelques centimètres (par exemple, une région d'environ 1 à 20 cm). La taille de la bobine d'induction n'est donc que de quelques centimètres (par exemple, d'environ 1 à 20 cm) et ceci quelle que soit la taille du substrat tubulaire à calciner ;
- le rendement est élevé puisque la majeure partie de l'énergie est transmise au substrat tubulaire pour le chauffer ;
- l'énergie est apportée à un endroit précis du substrat tubulaire. Le suivi de la température en temps réel est possible. Elle peut être ajustée en optimisant, soit la vitesse de déplacement de la bobine, soit la puissance injectée dans le substrat tubulaire. Un contrôle de l'homogénéité de la température permet l'obtention d'une phase homogène tout au long du substrat tubulaire ; et
- le dernier point concerne la vitesse de chauffage. Celle-ci est presque illimitée puisqu'un revêtement est calciné de l'intérieur vers l'extérieur assurant ainsi une bonne adhésion du revêtement au substrat et évitant ainsi la formation de cloques.

D'autres caractéristiques et avantages de la présente invention apparaîtront plus clairement à la lecture de la description détaillée qui découle d'un mode de réalisation de l'invention donné à titre d'exemple nullement limitatif et illustré par les dessins annexés, dans lesquels :

- la Figure 1 illustre un appareil de production d'un élément de capteur solaire ;

- la Figure 2 illustre un appareil de production d'un élément de capteur solaire selon une variante de la présente invention ;

- la Figure 3 montre des détails d'un dispositif de chauffage par induction de l'appareil illustré dans la Figure 1 ;

- la Figure 4 illustre une structure sélective multi-revêtements composée de trois revêtements selon la présente invention ;

- la Figure 5 est une image d'un élément de capteur solaire selon la présente invention comprenant un substrat tubulaire d'une longueur de deux mètres et une structure sélective multi-revêtements obtenu au moyen de l'appareil illustré dans la Figure 1 ; et

- la Figure 6 montre une image infrarouge du substrat tubulaire durant la calcination pour le suivi en temps réel de la température.

**Description détaillée de l'invention**

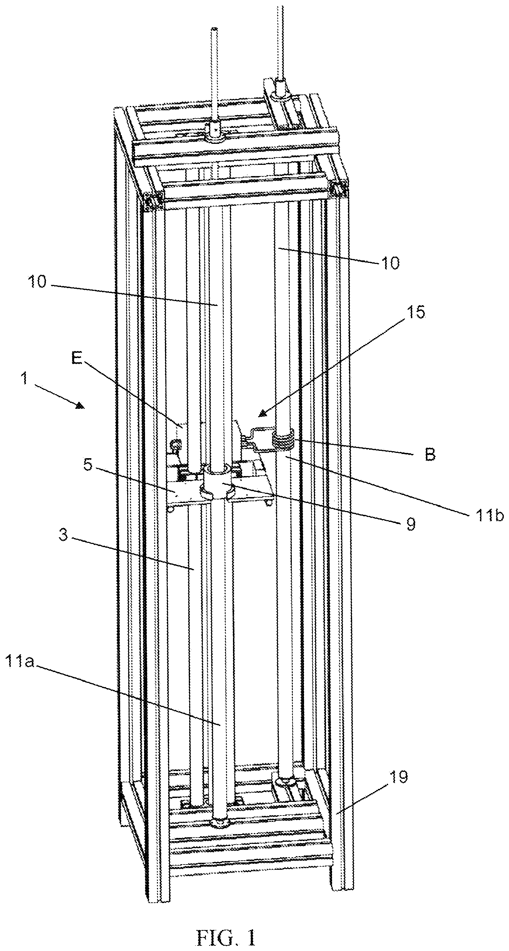

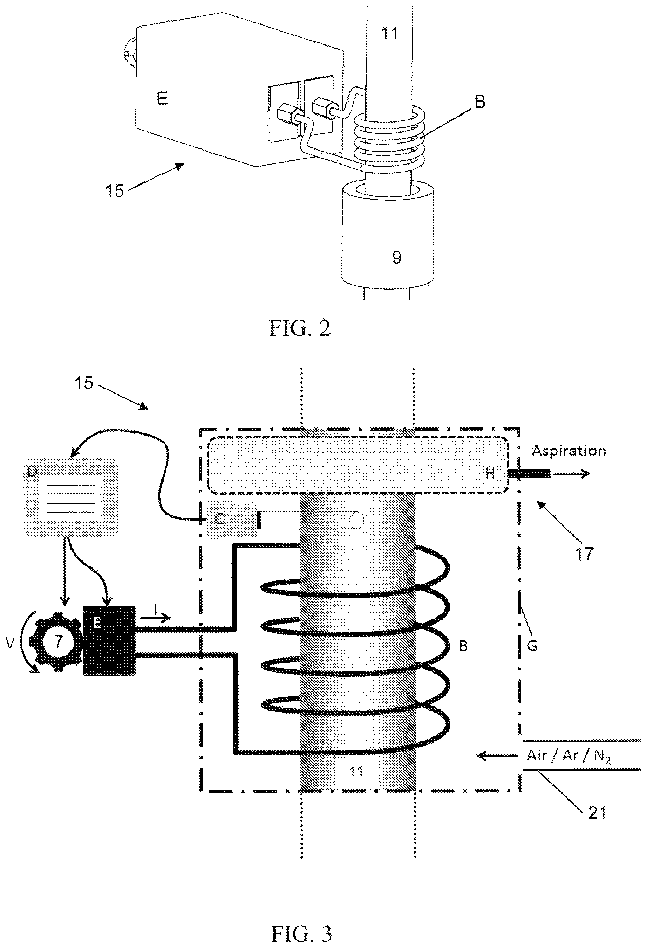

On a illustré sur la Figure 1 un exemple d'un appareil 1 de production d'un élément de capteur solaire selon la présente invention. La Figure 2 illustre une variante de l'appareil de la Figure 1 et la Figure 3 montre des détails d'un dispositif de chauffage par induction de l'appareil.

L'appareil 1 comprend :

- Un rail 3 linéaire à vis muni d'un chariot 5 de course 2000 mm (par exemple, RK Rose+Krieger, EP40) ;
- Un moteur 7 (Figure 3) commandé en fréquence pour le déplacement du chariot 5 (par exemple SN5FR) ;
- Un bac mobile 9 fixé au chariot 5 pour l'application d'un revêtement 10,25 à un substrat tubulaire 11a ;
- Un dispositif 15 de chauffage d'un substrat tubulaire 11b par induction fixé au chariot 5 (par exemple, IDPartner, Onduleur 230V/3600W);
- Un système 17 d'aspiration des gaz et particules (Figure 3) émis durant une calcination, une enceinte G configurée pour admettre d'un côté 21 les gaz nécessaires à la calcination et pour rejeter d'un autre côté H les particules ou gaz émis durant la calcination H par l'intermédiaire du système 17 d'aspiration ; et
- Un cadre parallélépipédique 19 pour la tenue mécanique de tous les éléments précédents (par exemple, RK Rose+Krieger, Système de profilés BLOCAN).

Le dispositif 15 de chauffage par induction (Figure 3) inclut une bobine à induction B apte à entourer un substrat tubulaire 11 et à se déplacer le long du substrat tubulaire 11 par l'intermédiaire du chariot 5. Le dispositif 15 de chauffage par induction comprend en outre un boîtier d'adaptation E configuré pour déterminer un courant I injecté dans la bobine et une fréquence du courant alternatif qui peut être varié, par exemple, entre 20kHz et 300kHz.

La densité d'énergie calorifique transmise par unité de surface du substrat tubulaire 11 et unité de temps peut être variée entre 0,1 et 30 kW et peut être ajustée en fonction de la fréquence du courant alternatif ou/et la vitesse de déplacement de la bobine B.

La forme de la bobine est refroidie à l'aide d'un liquide caloporteur circulant à l'intérieur de la bobine.

Pour le durcissement d'un substrat tubulaire 11 d'environ 40 mm de diamètre, la bobine est composée, par exemple, d'un tube de cuivre dont le diamètre extérieur varie entre 1 et 10 mm, le nombre de spire est compris entre 1 et 20, la longueur de la bobine varie entre 1 et 200 mm et le diamètre intérieur varie entre 10 et 200 mm.

Le dispositif 15 de chauffage par induction peut aussi inclure un thermomètre infrarouge C placé directement au-dessus de la bobine B permettant de connaître précisément la température du substrat tubulaire 11.

Le dispositif 15 inclut un outil informatique D et la température peut être ajustée, par le biais de l'outil informatique D, en modifiant la vitesse de déplacement V de la bobine B grâce au moteur 7 et/ou en modifiant un courant injecté I dans la bobine à partir d'un boîtier d'adaptation E et/ou la fréquence du courant alternatif.

Le tout est entouré de l'enceinte G admettant du côté 21 les gaz nécessaires à la calcination et rejetant de l'autre côté H les particules ou gaz émis durant la calcination H.

L'appareil 1 de production d'un élément de capteur solaire illustré dans la Figure 1 est apte à simultanément déposer un revêtement sur le substrat tubulaire 11a par l'intermédiaire du bac 9 qui se déplace du haut vers le bas avec le chariot 5 et à calciner le substrat tubulaire 11b comprenant déjà un revêtement déposé sur la surface extérieure du substrat tubulaire 11b par l'intermédiaire de la bobine B qui se déplace simultanément du haut vers le bas.

Dans la variante de l'appareil de production d'un élément de capteur solaire illustré dans la Figure 2, la bobine B est placée au-dessus du bac 9 (en série). La bobine B et le bac 9 se déplacent simultanément du haut vers le bas d'un substrat tubulaire 11. Ceci permet le dépôt et la calcination d'un revêtement sur le substrat tubulaire 11 avec un seul passage du chariot 5 du haut vers le bas.

La préparation par technique sol-gel d'une solution pour un revêtement à déposer est maintenant décrite.

De manière générale, un procédé sol-gel permet, par polymérisation de précurseurs moléculaires en solution, d'obtenir des matériaux homogènes sans passer par le point de fusion. Par définition, le procédé sol-gel est une méthode qui permet de générer des céramiques en passant par un stade de sol puis de gel. Très souvent, la solution est préparée à température ambiante en dissolvant un sel (le précurseur, comportant des atomes M métalliques ou semi-conducteurs) dans un alcool pour obtenir un alcoxyde. En ajoutant de l'eau, des réactions d'hydrolyse apparaissent : l'alcoxyde capte le proton d'une molécule d'eau et relâche un groupement organique alkyle $C_nH_{2n+1}$. La solution obtenue est nommée sol. Ces réactions s'accompagnent de réactions de condensation, où les alcoxydes et les molécules produites durant l'hydrolyse forment des liaisons M-O-M entre elles, en produisant soit une molécule d'eau, soit un alcool. Le pH de la solution ou la concentration en eau sont des facteurs qui régissent l'équilibre entre ces deux réactions et conditionnent la taille des molécules. La solution colloïdale ou polymérique obtenue, appelée gel, contient des particules colloïdales ou des molécules, suffisamment petites pour rester en suspension grâce aux mouvements browniens, dans une phase liquide.

Pour donner un exemple, une solution stable pour l'obtention d'un oxide absorbant Cu-Co-Mn-O est réalisée en appliquant les étapes suivantes :

-    une quantité définie d'acétate de manganèse est introduite dans un récipient en verre,
-    ce précurseur solide est ensuite totalement dissous dans de l'acide nitrique concentré (65%),
-    le solvant, l'éthanol pur, est ajouté en quantité suffisante pour obtenir la concentration molaire souhaitée,
-    le chlorure de cobalt est ensuite ajouté puis totalement dissous,
-    le chlorure de cuivre est ensuite ajouté puis totalement dissous,
-    en ajustant la pression et la température de la solution, la majeure partie de l'éthanol est évaporée et la concentration molaire augmente,
-    la masse d'éthanol évaporée est ensuite réincorporée en solution afin de retrouver la concentration molaire initiale,
-    une deuxième étape d'évaporation est appliquée afin d'augmenter à nouveau la concentration molaire de la solution,
-    la masse d'éthanol évaporée est une fois encore réincorporée en solution pour retrouver la concentration molaire initiale,
-    l'eau déminéralisée et déionisée est ajoutée,
-    le Triton-X100 est ajouté,
-    la solution est maintenue fermée à 70°C pendant 12h pour permettre la formation des liaisons chimiques propres aux procédés sol-gel.

Lors de l'application de la solution, par l'intermédiaire du bac 9, les phases liquides s'évaporent et le gel se transforme en xerogel. Durant la calcination, à des températures d'environ 300°C à 500°C, les composés organiques sont oxydés et le gel est déshydraté pour permettre la formation de l'oxyde souhaité. Ce procédé permet donc, à partir de sels métalliques en solution, de former des revêtements inorganiques

Design d'une structure multi-revêtements préférée

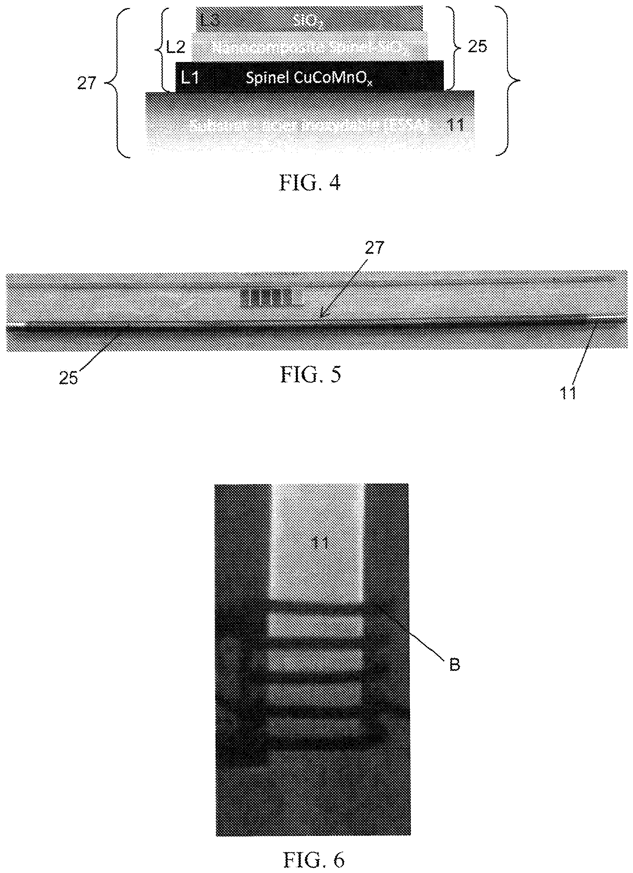

Selon un mode de réalisation particulièrement avantageux de l'invention, une structure sélective multi-revêtements 25 (Figure 4) est composée de 3 revêtements L1, L2, L3 distincts dont l'épaisseur respective est de l'ordre de 100nm chacun. L'épaisseur de chaque revêtement permet l'observation de phénomènes interférentiels à partir de lumière naturelle. La structure sélective multi-revêtements 25 est apte à absorber un flux lumineux solaire incident dans la structure sélective 25 et à convertir ce rayonnement solaire en chaleur.

La structure multi-revêtements 25 est déposée sur le substrat tubulaire 11 afin de former un élément de capteur solaire 27.

Le substrat tubulaire 11 comprend un matériau conducteur ou une couche conductrice. Par exemple, le substrat tubulaire 11 est un tube métallique ou un tube comportant une couche métallique déposée sur sa surface extérieure. Dans un mode de réalisation préféré, le substrat tubulaire 11 est un tube en acier inoxydable (Figure 4).

Les propriétés optiques de la structure multi-revêtements 25 déposée sur le tube en acier inoxydable sont bonnes ($\alpha_{sol}$=0.9, $\varepsilon_{th}$=0.1 pour une sélectivité de $\alpha_{sol}/\varepsilon_{th}$ =9) et la durabilité en milieu acide et à 400°C à l'air sont exceptionnel.

En utilisant l'appareil 1 de production d'un élément de capteur solaire (Figure 1), un premier revêtement L1 est déposé sur le substrat tubulaire 11 et calciné par la chaleur crée par une différence de potentiel électrique généré dans le substrat tubulaire 11 par la bobine B. Un deuxième revêtement L2 est ensuite déposé sur le revêtement L1 et calciné de la même manière suivi par le dépôt d'un troisième revêtement L3 déposé sur le revêtement L2 et calciné de la même manière.

Le premier revêtement L1 déposé sur le substrat tubulaire 11 est un oxyde absorbant composé des éléments suivants : Cu-Co-Mn-O. Le troisième revêtement L3 est un oxyde de silicium qui répond à deux fonctions : d'une part, il fait office de barrière à la corrosion pour apporter une durabilité exceptionnelle à la structure multi-revêtements 25 et d'autre part, fait office de couche antireflet pour obtenir des propriétés optiques performantes. Le revêtement intermédiaire L2 est composé d'un mélange des deux autres revêtements : Cu-Co-Mn-Si-O. Son indice de réfraction se situe entre celui du premier revêtement Cu-Co-Mn-O et celui du troisième revêtement $SiO_2$. Ce revêtement est donc une marche intermédiaire entre les indices de réfraction des revêtements inférieure et supérieure et permet une meilleure absorption du flux lumineux incident dans la structure sélective multi-revêtements 25.

Alternativement, la structure 25 peut être composée d'une superposition d'autres matériaux, identiques ou différents, déposés en revêtements distincts. La structure 25 peut aussi être composée d'un seul revêtement.

Application d'un revêtement à un substrat tubulaire 11 - calcination par induction

Une solution est préparée par technique sol-gel pour chaque revêtement L1, L2 et L3 à déposer.

Dans un exemple non limitatif de l'invention on utilise un tube en acier inoxydable de dimensions suivantes : diamètre 40mm, longueur 2000mm. L'appareil 1 de production d'un élément de capteur solaire (la Figure 1) fonctionne verticalement et répond aux deux fonctions suivantes :

- l'application d'un film liquide par dip-coating à l'aide du bac mobile 9 ;
- la calcination du film déposé à l'aide d'un chauffage par induction mobile B.

Ces deux étapes permettent le dépôt d'un revêtement homogène ou après itération le dépôt d'une structure multi-revêtements absorbante et homogène sur l'ensemble du substrat tubulaire 11.

La Figure 5 est une image d'un élément de capteur solaire 27 comprenant un substrat tubulaire 11 d'une longueur deux mètres et une structure sélective multi-revêtements obtenu au moyen de l'appareil 1 de la Figure 1.

Pour la production de l'élément de capteur solaire 27 et (substrat tubulaire 11 comprenant une structure sélective multi-revêtements 25), un bac 9 mobile percé contenant la solution pour le revêtement (L1, L2 ou L3) à déposer (préparée par le procédé sol-gel) est d'abord déplacé du haut vers le bas le long du substrat tubulaire 11 afin de déposer un revêtement et l'inducteur (la bobine B) est ensuite utilisé pour la calcination de ce revêtement mince déposé.

Durant la calcination, une caméra infrarouge permet de suivre et déterminer en temps réel la température du substrat tubulaire 11 et du revêtement déposé (ou revêtements déposés) (Figure 6). Le suivi de la température se fait sans contact, par mesure du rayonnement infrarouge émis par la surface. Les revêtements L1, L2, L3 sont déposés de manière successive avec une étape de calcination entre chaque dépôt de revêtement (le bac 9 étant rempli après chaque calcination avec une différente solution correspondant au revêtement à déposer). Le dépôt des revêtements supérieurs L2, L3 n'altère pas les qualités optique et mécanique des revêtements inférieurs L1, L2.

Dans le paysage énergétique planétaire, cet élément de capteur solaire 27 (substrat tubulaire 11 comprenant la structure multi-revêtements 25) est utilisé comme élément central des capteurs solaires thermodynamiques à concentration (CSP Concentrated Solar Power) efficaces pour la production d'électricité. Avec la mutation des systèmes de production d'électricité dans le monde, la production d'énergie électrique est au centre des préoccupations des décideurs et la production d'énergie électrique solaire est voué à jouer un rôle de plus en plus important dans les années à venir.

La présente invention concerne ainsi un procédé de calcination par induction d'un substrat tubulaire incluant des revêtements déposés en utilisant la technique sol-gel.

La présente invention concerne la calcination des revêtements d'une structure sélective multi-revêtements avec contrôle de la vitesse et de l'atmosphère de calcination.

Comme représenté sur la Figure 3, la bobine d'induction B se déplace le long du substrat tubulaire 11 à une vitesse V, du haut vers le bas, et injecte un courant I dans la bobine de cuivre. L'énergie électromagnétique injectée dans le substrat tubulaire 11 se transforme en chaleur. La température du tube est connue en temps réel et l'optimisation des paramètres V et I par le biais d'un contrôle automatisé permettent un ajustement de la température de calcination du substrat tubulaire 11.

La zone de calcination est entourée de l'enceinte hermétique G où les flux et la nature des gaz sont contrôlés. La calcination peut se faire sous atmosphère standard mais également dans une atmosphère raréfiée en oxygène en utilisant par exemple de l'argon ou de l'azote. Dans la partie supérieure de l'enceinte G de calcination se trouve le système d'aspiration 17 permettant d'évacuer les gaz et éventuelles particules émises durant la calcination.

Cette méthode de durcissement/calcination de revêtements minces est efficace et rapide. Elle permet la fabrication de revêtements minces et de structure multi-revêtements de bonne qualité même sur acier inoxydable non-magnétique, ce qui constitue une surprise pour l'innovation. Grâce à son système de contrôle de la température, elle permet un chauffage homogène et offre donc un bon niveau de reproductibilité.

La présente invention concerne en outre un capteur solaire dont l' absorbeur inclut un ou plusieurs éléments de capteur solaire 27. Le capteur solaire peut en outre être muni d'un élément permettant la concentration du rayonnement solaire. Ce concentrateur peut être de type Fresnel ou parabolique.

On comprendra que diverses modifications et / ou améliorations évidentes pour l'homme du métier peuvent être apportées aux différents modes de réalisation de l'invention décrits dans la présente description sans sortir du cadre de l'invention défini par les revendications annexées. Par exemple, le dépôt et la calcination d'une structure ayant une pluralité de revêtements sont décrits ci-dessus. Toutefois, la présente invention concerne aussi le dépôt et la calcination d'un seul revêtement sur un substrat tubulaire 11. En outre, le dépôt d'un revêtement (ou film liquide) par trempage (dip-coating) est décrit ci-dessus, néanmoins, le dépôt peut être fait par spray ou autres techniques connues.

**Revendications**

1. Procédé de durcissement d'un revêtement (L1,L2,L3) d'un élément de capteur solaire (27), l'élément (27) incluant un matériau conducteur ou une couche conductrice, le procédé comprenant l'étape que l'on fournit le revêtement (L1,L2,L3) sur le matériau conducteur ou la couche conductrice par une méthode sol-gel et que l'on durcit ledit revêtement (L1,L2,L3) par chauffage par induction, et le procédé étant **caractérisé en ce qu'**une partie du revêtement (L1,L2,L3) est chauffée sélectivement de l'intérieur du revêtement vers l'extérieur du revêtement (L1,L2,L3) et **en ce que** cette partie du revêtement (L1,L2,L3) est chauffée sélectivement par une bobine à induction (B) entourant cette partie du revêtement (L1,L2,L3).

2. Procédé selon la revendication précédente, **caractérisé en ce que** la bobine à induction (B) est apte à se déplacer le long du revêtement (L1,L2,L3) afin de progressivement durcir ledit revêtement (L1,L2,L3).

3. Procédé selon la revendication précédente, **caractérisé en ce que** la température de la partie du revêtement (L1,L2,L3) chauffée par la bobine (B) est déterminée par une vitesse (V) de déplacement de la bobine (B) et/ou un courant (I) circulant dans la bobine (B).

4. Procédé selon l'une quelconque des revendications précédentes, **caractérisé en ce que** le revêtement (L1,L2,L3) est déposé directement sur un substrat tubulaire (11) de l'élément (27), ou sur un autre revêtement (L1,L2,L3).

5. Procédé selon l'une quelconque des revendications précédentes, **caractérisé en ce que** l'élément (27) est tubulaire.

6. Procédé selon l'une quelconque des revendications précédentes, **caractérisé en ce que** l'épaisseur du revêtement (L1,L2,L3) permet l'observation de phénomènes interférentiels à partir de lumière naturelle.

7. Procédé selon l'une quelconque des revendications précédentes dans lequel le revêtement (L1,L2,L3) obtenu par le méthode sol-gel est un revêtement (L1) d'un oxyde absorbant composé des éléments Cu-Co-Mn-O.

8. Procédé selon l'une quelconque des revendications précédentes dans lequel le revêtement (L1,L2,L3) est déposé par une méthode de dépôt par trempage-retirage ou spray.

9. Procédé selon l'une quelconque des revendications précédentes, **caractérisé en ce qu'**il est fait dans une atmosphère raréfiée en poussières et dont la concentration d'oxygène est contrôlée.

10. Procédé de production d'un élément de capteur solaire (27) comprenant les étapes de :

    - appliquer un premier revêtement (L1) d'un oxyde absorbant composé des éléments Cu-Co-Mn-O sur la surface extérieure d'un substrat tubulaire (11) incluant un matériau conducteur ou une couche conductrice ;
    - durcir ce premier revêtement (L1) en mettant en œuvre le procédé de durcissement selon l'une quelconque des revendications 1 à 9 ;
    - appliquer un deuxième revêtement (L2) composé des éléments Cu-Co-Mn-Si-O sur le premier revêtement (L1) ;
    - durcir le deuxième revêtement en mettant en œuvre le procédé de durcissement selon l'une quelconque des revendications 1 à 9 ;
    - appliquer un troisième revêtement composé d'un oxyde de silicium sur le deuxième revêtement (L2); et
    - durcir le troisième revêtement (L3) en mettant en œuvre le procédé de durcissement selon l'une quelconque des revendications 1 à 9.

**Patentansprüche**

1. Verfahren zum Härten einer Beschichtung (L1, L2, L3) eines Sonnenkollektorelements (27), wobei das Element (27) ein leitendes Material oder eine leitende Schicht aufweist, wobei das Verfahren den Schritt des Vorsehens der Beschichtung (L1, L2, L3) auf dem leitenden Material oder der leitenden Schicht durch ein Sol-Gel-Verfahren und des Härtens der Beschichtung (L1, L2, L3) durch induktive Erwärmung umfasst, und das Verfahren **dadurch gekennzeichnet ist, dass** ein Abschnitt der Beschichtung (L1, L2, L3) vom Inneren der Beschichtung zum Äußeren der Beschichtung (L1, L2, L3) selektiv erwärmt wird, und dadurch, dass dieser Abschnitt der Beschichtung (L1, L2, L3) durch eine Induktionsspule (B), die diesen Abschnitt der Beschichtung (L1, L2, L3) umgibt, selektiv erwärmt wird.

2. Verfahren nach dem vorhergehenden Anspruch, **dadurch gekennzeichnet, dass** die Induktionsspule (B) geeignet ist, sich entlang der Beschichtung (L1, L2, L3) zu bewegen, um die Beschichtung (L1, L2, L3) allmählich zu härten.

**3.** Verfahren nach dem vorhergehenden Anspruch, **dadurch gekennzeichnet, dass** die Temperatur des Abschnitts der Beschichtung (L1, L2, L3), der durch die Spule (B) erwärmt wird, von einer Bewegungsgeschwindigkeit (V) der Spule (B) und/oder einem Strom (I), der in der Spule (B) zirkuliert, bestimmt wird.

**4.** Verfahren nach einem der vorhergehenden Ansprüche, **dadurch gekennzeichnet, dass** die Beschichtung (L1, L2, L3) direkt auf einem röhrenförmigen Substrat (11) des Elements (27) oder auf einer anderen Beschichtung (L1, L2, L3) aufgetragen wird.

**5.** Verfahren nach einem der vorhergehenden Ansprüche, **dadurch gekennzeichnet, dass** das Element (27) röhrenförmig ist.

**6.** Verfahren nach einem der vorhergehenden Ansprüche, **dadurch gekennzeichnet, dass** die Dicke der Beschichtung (L1, L2, L3) die Beobachtung von Interferenzphänomenen aus natürlichem Licht gestattet.

**7.** Verfahren nach einem der vorhergehenden Ansprüche, wobei die Beschichtung (L1, L2, L3), die durch das Sol-Gel-Verfahren erhalten wird, eine Beschichtung (L1) aus einem absorbierenden Oxid ist, das aus den Elementen Cu-Co-Mn-O gebildet ist.

**8.** Verfahren nach einem der vorhergehenden Ansprüche, wobei die Beschichtung (L1, L2, L3) durch ein Tauchbeschichtungs- oder Sprüh-Auftragsverfahren aufgetragen wird.

**9.** Verfahren nach einem der vorhergehenden Ansprüche, **dadurch gekennzeichnet, dass** es in einer staubarmen Umgebung mit kontrollierter Sauerstoffkonzentration durchgeführt wird.

**10.** Verfahren zur Herstellung eines Sonnenkollektorelements (27), umfassend die folgenden Schritte:

- Aufbringen einer ersten Beschichtung (L1) aus einem absorbierenden Oxid, das aus den Elementen Cu-Co-Mn-O gebildet ist, auf die Außenfläche eines röhrenförmigen Substrats (11), das ein leitendes Material oder eine leitende Schicht aufweist;
- Härten dieser ersten Beschichtung (L1) durch Umsetzung des Härtungsverfahrens nach einem der Ansprüche 1 bis 9;
- Aufbringen einer zweiten Beschichtung (L2), die aus den Elementen Cu-Co-Mn-Si-O gebildet ist, auf die erste Beschichtung (L1);
- Härten der zweiten Beschichtung durch Umsetzung des Härtungsverfahrens nach einem der Ansprüche 1 bis 9;

- Aufbringen einer dritten Beschichtung, die aus einem Siliziumoxid gebildet ist, auf die zweite Beschichtung (L2); und
- Härten der dritten Beschichtung (L3) durch Umsetzung des Härtungsverfahrens nach einem der Ansprüche 1 bis 9.

**Claims**

**1.** Process for hardening a coating (L1, L2, L3) of a solar collector element (27), the element (27} including a conductive material or a conductive layer, the process comprising the step of providing the coating (L1, L2, L3) on the conductive material or the conductive layer by a sol-gel method and of hardening said coating (L1, L2, L3) by induction heating, and the process being **characterized in that** a portion of the coating (L1, L2, L3) is heated selectively from the inside of the coating to the outside of the coating (L1, L2, L3) and **in that** this portion of the coating (L1, L2, L3) is heated selectively by an induction coil (B) surrounding this portion of the coating (L1, L2, L3).

**2.** Process according to the preceding claim, **characterized in that** the induction coil (B) is capable of moving along the coating (L1, L2, L3) in order to progressively harden said coating (L1, L2, L3}.

**3.** Process according to the preceding claim, **characterized in that** the temperature of the portion of the coating (L1, L2, L3) heated by the coil (B) is determined by a speed of travel (V) of the coil (B) and/or a current (I) circulating in the coil (B).

**4.** Process according to any one of the preceding claims, **characterized in that** the coating (L1, L2, L3) is deposited directly on a tubular substrate (11) of the element (27), or on another coating (L1, L2, L3).

**5.** Process according to any one of the preceding claims, **characterized in that** the element (27} is tubular.

**6.** Process according to any one of the preceding claims, **characterized in that** the thickness of the coating (L1, L2, L3) enables the observation of interference phenomena from natural light.

**7.** Process according to any one of the preceding claims, in which the coating (L1, L2, L3) obtained by the sol-gel method is a coating (L1) of an absorbent oxide composed of the elements Cu-Co-Mn-O.

**8.** Process according to any one of the preceding claims, in which the coating (L1, L2, L3) is deposited by a dip-coating or spray deposition method.

9. Process according to any one of the preceding claims, **characterized in that** it is carried out in a dust-depleted atmosphere, the oxygen concentration of which is controlled.

10. Process for producing a solar collector element (27) comprising the steps of:

> - applying a first coating (L1) of an absorbent oxide composed of the elements Cu-Co-Mn-O on the outer surface of a tubular substrate (11) including a conductive material or a conductive layer;
> - hardening this first coating (L1) by carrying out the hardening process according to any one of Claims 1 to 9;
> - applying a second coating (L2) composed of the elements Cu-Co-Mn-Si-O on the first coating (L1);
> - hardening the second coating by carrying out the hardening process according to any one of Claims 1 to 9;
> - applying a third coating composed of a silicon oxide on the second coating (L2); and
> - hardening the third coating (L3) by carrying out the hardening process according to any one of Claims 1 to 9.

FIG. 1

FIG. 2

FIG. 3

FIG. 4

FIG. 5

FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011048235 A
- CN 201852338 U, L. Zhu
- CN 102087054 A, R. Jiang
- DE 19620645 C2, A. Schüssler
- EP 2243861 A2, B. Rostami
- EP 1930469 A1, : K. Sang Hyeob Daejeon
- WO 2006092536 A2, R. Beaurain
- EP 1867934 A1

- EP 1217394 B1, Alanod
- JP 55006414 A
- JP 55014827 A
- JP 57067756 A, Matsushita
- JP 4312915 A
- EP 1887293 A2, Viessmann
- EP 2341038 A1
- EP 2253737 A1

**Littérature non-brevet citée dans la description**

- **KALUZA L. ; OREL B. ; DRAZIC G ; KÖHL M.** Sol-gel derived CuCoMnOx spinel coatings for solar absorbers: Structural and optical properties. *Sol. Energy Mater. and Sol. Cells,* 2001, vol. 70, 187
- **BAYÓN R. ; VICENTE G. ; MAFFIOTTE C. ; MORALES Á.** Preparation of selective absorbers based on CuMn spinels by dip-coating method. *Renewable Energy,* 2008, vol. 33, 348-353

- **JOLY M. ; ANTONETTI Y. ; PYTHON M. ; GONZALEZ M. ; GASCOU T. ; SCARTEZZINI J.-L. ; SCHÜLER A.** Novel black selective coating for tubular solar absorbers based on a sol-gel method. *Solar Energy,* 2013, vol. 94, 233-239